# EUROPÄISCHE PATENTANMELDUNG

(11) **EP 3 299 094 A1**
(43) Veröffentlichungstag der Anmeldung: **28.03.2018**
(21) Anmeldenummer: 16190654.0
(22) Anmeldetag: 26.09.2016
(51) Int. Cl.: B21D 28/02, B21D 28/10, B21D 28/26, B21D 39/03, B21D 43/02, B23P 11/00

(54) **VERFAHREN ZUR HERSTELLUNG EINES WERKSTÜCKS SOWIE STANZ-HANDLING-WERKZEUG ZUR DURCHFÜHRUNG DES VERFARHENS**

(71) Anmelder: TRUMPF Werkzeugmaschinen GmbH + Co. KG, 71254 Ditzingen (DE)
(72) Erfinder: HEINZ, Alexander, 71665 Vaihingen an der Enz (DE); KAPPES, Dr. Jens, 70771 Leinfelden-Echterdingen (DE)
(74) Vertreter: Mammel und Maser

(57) **Zusammenfassung**

Die Erfindung betrifft ein Verfahren zur Herstellung von Werkstücken aus mehreren gleichen oder voneinander abweichenden plattenförmigen Materialien (12, 13), insbesondere zur Herstellung eines verstärkten Werkstücks (34), bei dem mit einem Stanz-Handling-Werkzeug (20), welches ein Oberwerkzeug (21) mit zumindest einem Stanzstempel (35) und ein Unterwerkzeug (22) mit zumindest einer Stanzmatrize (36) aufweist, zumindest ein erstes Werkstückteil (49) aus einem ersten plattenförmigen Material (12) durch einen Trennschnitt freigeschnitten wird, bei dem beim Freischneiden das erste Werkstückteil (49) durch das Oberwerkzeug (21) oder das Unterwerkzeug (22) geklemmt oder gespannt gehalten wird, bei dem ein Clinch-Werkzeug (37), dem das erste Werkstückteil (49) aufnehmenden Oberwerkzeug (21) oder Unterwerkzeug (22) zugeordnet und dazwischen liegend das plattenförmige Material (12) oder ein weiteres plattenförmiges Material (13), das von dem Material des ersten Werkstückteils (49) abweicht oder ein zweites Werkstückteil (33), welches aus einem der plattenförmigen Materialien (12, 13) hergestellt ist, positioniert und das erste Werkstückteil (49) und das plattenförmige Material (12, 13) oder das zweite Werkstückteil (33) zueinander ausgerichtet werden und bei dem das Clinch-Werkzeug (37) und das das erste Werkstückteil (49) aufnehmende Oberwerkzeug (21) oder Unterwerkzeug (22) zusammengeführt und in das plattenförmige Material (12) und das erste Werkstückteil (49) oder in das zweite Werkstückteil (33) und das erste Werkstückteil (49) zumindest ein zusatzwerkstofffreier Verbindungspunkt (55) eingebracht wird.

## Beschreibung

Die Erfindung betrifft ein Verfahren zur Herstellung eines Werkstücks, insbesondere eines verstärkten Werkstückes, sowie ein Stanz-Handling-Werkzeug zur Durchführung des Verfahrens.

Aus der DE 195 24 235 A1 ist ein Verfahren zur Herstellung eines Formteils mit unterschiedlichen Materialstärken bekannt. Dabei ist vorgesehen, dass zunächst eine Basisplatine auf ein Zwischen- oder Fertigmaß zugeschnitten wird. Darauffolgend wird ein Verstärkungselement geschnitten und auf der Basisplatine mittels einer Fügetechnik, wie beispielsweise Kleben, Schweißen oder Löten als auch Clinchen, verbunden. Darauffolgend werden weitere Stanz- und Umformschritte an der Basisplatine durchgeführt, um das Formteil herzustellen.

Der Erfindung liegt die Aufgabe zugrunde, ein Verfahren zur Herstellung eines insbesondere verstärkten Werkstücks vorzuschlagen, bei welchem eine Erhöhung der Prozesssicherheit und eine Verbesserung der Positioniergenauigkeit der zu verbindenden Werkstücke ermöglicht werden. Ebenso liegt der Erfindung die Aufgabe zugrunde, ein Stanz-Handling-Werkzeug zur Durchführung eines solchen Verfahrens vorzuschlagen.

Die der Erfindung zugrunde liegende Aufgabe wird durch ein Verfahren gelöst, bei dem mit einem Stanz-Handling-Werkzeug, welches ein Oberwerkzeug mit zumindest einem Stanzstempel und ein Unterwerkzeug mit zumindest einer Stanzmatrize aufweist, das erste Werkstückteil aus einem ersten plattenförmigen Material durch einen Trennschnitt freigeschnitten wird und beim Freischneiden das erste Werkstückteil durch das Oberwerkzeug oder das Unterwerkzeug geklemmt oder gespannt gehalten wird und ein Clinch-Werkzeug dem das erste Werkstückteil aufnehmenden Ober- oder Unterwerkzeug zugeordnet wird sowie dazwischen liegend das plattenförmige Material oder ein davon abweichendes plattenförmiges Material oder ein zweites Werkstückteil, welches aus einem der plattenförmigen Materialien hergestellt ist, positioniert und das erste Werkstückteil und das plattenförmige Material oder das zweite Werkstückteil zueinander ausgerichtet werden und bei dem das Clinch-Werkzeug sowie das das erste Werkstückteil aufnehmende Ober- oder Unterwerkzeug zusammengeführt und in das plattenförmige Material und das erste Werkstückteil oder in das erste und zweite Werkstückteil zumindest ein zusatzwerkstofffreier Verbindungspunkt eingebracht wird. Durch eine solche Abfolge von Arbeitsschritten ist ermöglicht, dass nach dem Freischneiden des ersten Werkstückteiles aus dem plattenförmigen Material eine positionsgenaue Aufnahme des ersten Werkstückteils durch das Oberwerkzeug oder Unterwerkzeug erfolgt und diese positionsgenaue Aufnahme während dem Positionieren zu dem Clinch-Werkzeug, insbesondere einer Clinch-Matrize, beibehalten werden kann. Darüber hinaus wird auch durch die Beibehaltung der Einspannung des ersten Werkstückteils am Stanz-Handling-Werkzeug eine Verkürzung der Bearbeitungszeit erzielt. Zudem kann durch die Aufnahme des ersten Werkstückteils beim Freischneiden durch das Oberwerkzeug oder Unterwerkzeug und dem darauffolgenden direkten Überführen zum zusatzwerkstofffreien Verbinden mit dem Werkstück auch die Prozesssicherheit erhöht werden, da dazwischen keine Handhabungsschritte für das erste Werkstückteil erforderlich sind.

Dieses vorbeschriebene Verfahren ist insbesondere dann vorgesehen, wenn das erste Werkstückteil eine flächige Erstreckung aufweist, die kleiner als ein Außenumfang oder eine Grundfläche eines Stanzstempels des Oberwerkzeugs oder einer Stanzmatrize des Unterwerkzeugs ist.

Die der Erfindung zugrunde liegende Aufgabe wird alternativ durch ein Verfahren gelöst, bei dem mit einem Stanz-Handling-Werkzeug, welches ein Oberwerkzeug mit zumindest einem Stanzstempel und zumindest ein Clinch-Werkzeug und ein Unterwerkzeug aufweist, das erste Werkstückteil aus einem ersten plattenförmigen Material durch einen Trennschnitt freigeschnitten wird und beim Freischneiden des ersten Werkstückteils durch den zumindest einen Stanzstempel am Oberwerkzeug geklemmt oder gespannt gehalten wird und bei dem das erste Werkstückteil zum plattenförmigen Material oder zu einem davon abweichenden Material oder ein zweites Werkstückteil, welches aus einem der plattenförmigen Materialien hergestellt ist, ausgerichtet und positioniert wird und bei dem der Stanzstempel am Oberwerkzeug nach dem Positionieren des ersten Werkstückteils zum plattenförmigen Material inaktiviert und ein am Oberwerkzeug vorgesehenes Clinch-Werkzeug aktiviert wird und das Clinch-Werkzeug am Oberwerkzeug mit einer Clinch-Matrize zusammenwirkt und in das erste und zweite Werkstückteil zumindest einen zusatzwerkstofffreien Verbindungspunkt eingebracht wird. Bei dieser Ausführungsform ist alternativ vorgesehen, dass das Stanz-Handling-Werkzeug ein Oberwerkzeug umfasst, an welchem sowohl zumindest ein Stanzstempel als auch ein Clinch-Werkzeug vorhanden ist, so dass an dem Stanzstempel das erste Werkstückteil geklemmt oder gespannt gehalten wird und zum zweiten Werkstückteil transportiert wird. Durch eine Ansteuerung beziehungsweise Aktivierung und Inaktivierung des Stanzstempels und des Clinch-Werkzeugs kann aufeinanderfolgend mit einem Oberwerkzeug das Freischneiden, Transportieren und Verbinden durchgeführt werden. Bei einer Inaktivierung des Stanzstempels oder des Clinch-Werkzeugs kann der inaktive Stanzstempel oder das inaktive Clinch-Werkzeug in einem Werkzeuggrundkörper des Oberwerkzeugs eingefahren werden. Bei einer Aktivierung ist der Stanzstempel oder das Clinch-Werkzeug in einer ortsfesten Position zum Werkzeuggrundkörper gehalten. Das Unterwerkzeug besteht zumindest aus einer Stanzmatrize und zumindest einer Clinch-Matrize. Dieses Verfahren ist insbesondere bei größeren Bauteilen vorgesehen, bei welchen die flächigen Abmessungen größer als ein Außenumfang oder eine Grundfläche eines Stanzstempels des Oberwerkzeuges sind.

Bevorzugt ist vorgesehen, dass das zumindest eine erste Werkstückteil und das plattenförmige Material oder das erste und das zweite Werkstückteil durch ein zusatzwerkstofffreies Fügen, insbesondere Durchsetzfügen, verbunden wird. Bei einem solchen Fügen, insbesondere Durchsetzfügen, werden das bevorzugt als Blechteil ausgebildete Zusatzteil und plattenförmige Material ohne Verwendung eines Zusatzwerkstoffes durch ein Umformverfahren miteinander verbunden, wobei bei einem solchen Umformverfahren Umformbereiche mit Hinterschneidungen geschaffen werden, um eine dauerhafte und stabile Verbindung zu ermöglichen.

Eine bevorzugte Ausgestaltung des Verfahrens sieht vor, dass das zumindest eine erste Werkstückteil und das zweite Werkstückteil aus demselben oder verschiedenen plattenförmigen Material hergestellt ist. Somit kann beispielsweise bei einer Aufspannung eines plattenförmigen Materials in einer Stanzmaschine zunächst das erste Werkstückteil in der Kontur hergestellt und anschließend aus dem plattenförmigen Material durch den Trennschnitt entfernt werden, um dieses darauffolgend an dem noch zu bearbeitenden oder zumindest teilweise bearbeiteten zweiten Werkstückteil aus demselben plattenförmigen Material aufzubringen. Bei einem anschließenden Bearbeitungsschritt kann dann das zweite Werkstückteil bezüglich der Kontur endbearbeitet und zur Bildung des verstärkten Werkstücks freigeschnitten werden. Alternativ kann das zweite Werkstückteil in der Kontur auch bereits bearbeitet sein, so dass lediglich eine Stegverbindung das zweite Werkstückteil noch zum plattenförmigen Material hält, welches nach dem Herstellen der Verbindungspunkte zum zumindest einen ersten Werkstückteil abgetrennt wird.

Bevorzugt ist vorgesehen, dass das erste Werkstückteil in einer Aufnahme an dem Stanzstempel und der Stanzmatrize geklemmt oder gespannt gehalten wird. Diese Aufnahme ist bevorzugt als eine Vertiefung ausgebildet. Die Ränder der Vertiefung können schräg ausgebildet sein, so dass die Aufnahmeöffnung eine größere Fläche als der Aufnahmeboden aufweist. Dadurch kann eine kraftschlüssige Positionierung des ersten Werkstückteils in der Aufnahme erfolgen.

Alternativ kann auch vorgesehen sein, dass das zweite Werkstückteil durch eine Stanz- und/oder Biege- und/oder Laserbearbeitung hergestellt ist und aus einem anderen Material als das erste Werkstückteil besteht und vor dem Verbinden mit dem ersten Werkstückteil zugeführt wird. Somit können auch verstärkte Werkstücke hergestellt werden, bei welchen das Material und/oder die Wandstärke des zumindest einen ersten Werkstückteils oder des bearbeiteten Werkstücks voneinander abweichen.

Eine weitere bevorzugte Ausgestaltung des Verfahrens sieht vor, dass zumindest ein Verbindungspunkt als Vorfixierung zwischen dem zumindest einen ersten Werkstückteil und dem plattenförmigen Material eingebracht und nach Beendigung der Bearbeitung des verstärkten Werkstücks der zumindest eine als Vorfixierung eingebrachte Verbindungspunkt ausgestanzt oder abgetrennt wird. Dadurch kann eine weitere Erhöhung der Positioniergenauigkeit erzielt werden, da unmittelbar beim Zuführen und Positionieren des ersten Werkstückteils zum Werkstück zumindest ein Verbindungspunkt eingebracht wird, um die Vorfixierung zu ermöglichen, unabhängig davon, ob dieser Verbindungspunkt an der Stelle benötigt wird.

Des Weiteren ist bevorzugt vorgesehen, dass zwei oder mehrere erste und/oder zweite Werkstückteile übereinander liegend positioniert und durch zumindest einen zusatzwerkstofffreien Verbindungspunkt miteinander zu einem Sandwich-Bauteil verbunden werden. Dadurch lassen sich auch mehrlagige Platten mit dazwischen liegenden Versteifungsrippen herstellen.

Die der Erfindung zugrunde liegende Aufgabe wird des Weiteren durch ein Stanz-Handling-Werkzeug zur Herstellung von Werkstücken, insbesondere von durch ein erstes Werkstückteil verstärktes Werkstück, gelöst, welches ein Oberwerkzeug mit zumindest einem Stanzstempel und ein Unterwerkzeug mit zumindest einer Stanzmatrize aufweist, wobei der Stanzstempel oder die Stanzmatrize nach dem letzten Trennschnitt zum Freischneiden eines ersten Werkstückteils aus einem plattenförmigen Material das erste Werkstückteil durch den Stanzstempel oder die Stanzmatrize geklemmt oder gespannt halten. Die Stanzmatrize oder der Stanzstempel sind somit frei von einem Abstreifer vorgesehen. Insbesondere ist eine Kontur des Stanzstempels oder der Stanzmatrize gewählt, so dass nach dem Freischneiden des ersten Bauteils die Klemmung oder Spannung zwischen dem ersten Werkstückteil und dem Stanzstempel oder der Stanzmatrize aufgebaut wird, so dass darauffolgend ein sicherer Transport des ersten Werkstückteils mittels dem Stanzstempel oder der Stanzmatrize ermöglicht ist.

Bevorzugt ist vorgesehen, dass der Stanzstempel oder die Stanzmatrize das erste Werkstückteil durch zumindest teilweises Umgreifen einer Außenkontur des ersten Werkstückteils oder durch ein Eingreifen in eine Innenkontur des ersten Werkstückteils halten. Beispielsweise bei kleinen Werkstückteilen, die kleiner als eine Grundfläche des Stanzstempels oder der Stanzmatrize bzw. ein Werkzeuggrundkörper des Oberwerkzeugs oder Unterwerkzeugs sind, kann der Stanzstempel oder die Stanzmatrize eine Aufnahme oder eine Vertiefung aufweisen, dessen Außenkontur geringfügig kleiner als die Außenkontur des ersten Werkstückteils ist oder dessen Seitenwände zur Vertiefung hin geneigt sind, so dass das erste Werkstückteil in der Vertiefung gespannt aufgenommen wird. Bei Bauteilen von einer flächigen Abmessung, welche sich über den Stanzstempel oder die Stanzmatrize hinaus erstrecken oder schwer zu greifende Außenkonturen aufweisen oder eine solche klemmende Aufnahme über die Außenkontur des Werkstücks nicht aufnehmen können, ist bevorzugt zumindest ein Stanzstempel vorgesehen, der an einer Innenkontur, wie beispielsweise einer runden oder mehreckigen Ausnehmung, angreift, um durch ein Klemmen oder Verkeilen das erste Werkstückteil aufzunehmen. Hierfür kann vorgesehen sein, dass der oder die Stanzstempel von der Stempelfläche ausgehend zum Werkzeuggrundkörper eine Schräge an einer Umfangswand aufweist, die sich bevorzugt gegenüber der Stempelfläche verjüngt beziehungsweise nach innen geneigt ist. Dadurch kann das Werkstück nach den Stanzen geklemmt gehalten werden. Insbesondere kann das Werkstück beim Abheben aus dem plattenförmigen Material oder Restgitter sich leicht neigen oder verkippen, wodurch des Klemmen oder Verkeilen unterstützt wird. Bevorzugt kann ein benachbartes Werkzeug, insbesondere Clinch-Werkzeug, am Werkzeuggrundkörper in der Länge kürzer ausgebildet sein als der oder die Stanzstempel.

Des Weiteren ist gemäß einer Ausführungsform vorgesehen, dass das Oberwerkzeug einen Stanzstempel mit einer Aufnahme für das erste Werkstückteil aufweist, und die Stanzmatrize des Unterwerkzeugs eine Druckfläche umfasst, um das erste Werkstückteil in die Aufnahme im Stanzstempel überzuführen sowie ein Clinch-Werkzeug, vorzugsweise eine Clinch-Matrize, welche mit dem Stanzstempel das erste Werkstückteil und das zweite Werkstückteil verbindet. Somit ist beispielsweise ein sogenanntes Anstanzwerkzeug mit zwei Matrizen vorgesehen, welche das Stanz-Handling-Werkzeug bilden. Die vorliegende Beschreibung gilt auch in vertauschter Weise, dass in der Stanzmatrize die Aufnahme vorgesehen ist und in dem Stanzstempel die Druckfläche aufweist und durch ein Clinch-Werkzeug mit der Spannmatrize zusammenwirkt. Diese Ausführungsform des Stanz-Handling-Werkzeugs ist insbesondere für kleine Bauteile vorgesehen, bei welchen eine Aufnahme beziehungsweise eine Vertiefung im Werkzeuggrundkörper eingebracht sein kann.

Eine alternative Ausgestaltung des Stanz-Handling-Werkzeugs sieht vor, dass das Oberwerkzeug zumindest einen Stanzstempel und zumindest ein Clinch-Werkzeug in einem Werkzeuggrundkörper aufweist, die mit einem Führungskörper relativ zum Werkzeuggrundkörper verschiebbar aufgenommen sind und zum Einbringen des Trennschnitts der zumindest eine Stanzstempel aktiviert ist, so dass der Stanzstempel während eines Arbeitshubes nicht verfahrbar zum Werkzeuggrundkörper gehalten ist, und das Clinch-Werkzeug inaktiviert ist, so dass das Clinch-Werkzeug während eines Arbeitshubes in den Werkzeuggrundkörper einfahrbar ist, und zum zusatzwerkstofffreien Verbinden des ersten Werkstückteils mit dem zweiten Werkstückteil der Stanzstempel inaktiviert und das Clinch-Werkzeug gegenüber dem Werkzeuggrundkörper aktiviert ist. Ein solches Oberwerkzeug wird auch als sogenanntes Multitool bezeichnet, welches mehrere Werkzeuge aufweisen kann, die wahlweise zum Einsatz ansteuerbar sind. Bevorzugt sind zwei zueinander benachbarte Stanzstempel zum Einbringen des Trennschnittes als Stanzstempel ausgebildet. Eine solche Ausführungsform weist den Vorteil auf, dass insbesondere großflächige oder schwere erste Werkstückteile sich daran verkeilen oder verspannen können, so dass eine gesicherte kraftschlüssige Aufnahme gegeben ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Werkzeugmaschine,
Figur 2 eine schematische Schnittansicht einer ersten Ausführungsform eines Stanz-Handling-Werkzeugs in einem ersten Arbeitsschritt,
Figur 3 eine schematische Schnittansicht des Stanz-Handling-Werkzeugs gemäß Figur 2 in einem zweiten Arbeitsschritt,
Figur 4 eine schematische Schnittansicht des Stanz-Handling-Werkzeugs gemäß den Figuren 2 und 3 in einem dritten Arbeitsschritt,
Figur 5 eine perspektivische Ansicht eines verstärkten Werkstückes,
Figur 6 eine perspektivische Ansicht auf eine alternative Ausführungsform eines Oberwerkzeugs des Stanz-Handling-Werkzeugs,
Figur 7 einen schematischen Vollschnitt des Oberwerkzeugs gemäß Figur 6,
Figur 8 eine schematische Ansicht von oben auf ein plattenförmiges Material nach der Herstellung eines ersten Werkstückteils, und
Figur 9 eine schematische Ansicht von oben auf ein verstärktes Werkstück vor dem Trennen aus einem plattenförmigen Material.

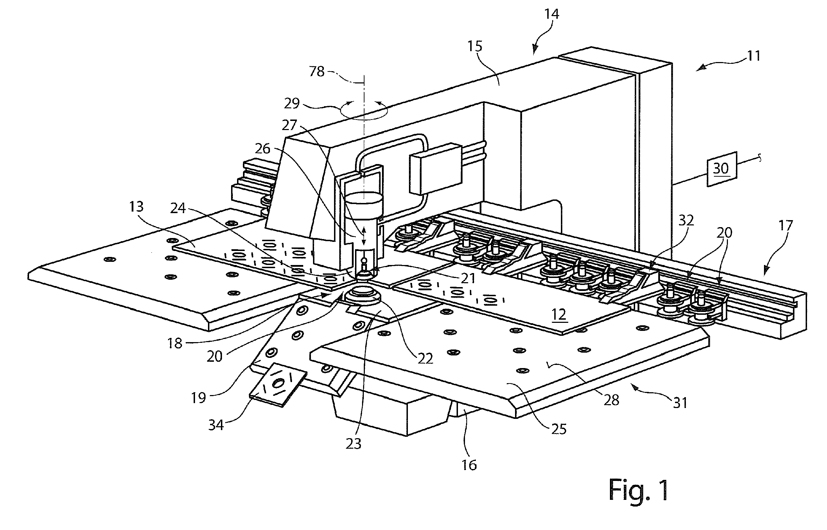

In Figur 1 ist perspektivisch eine Werkstückbearbeitungsmaschine 11 zum Bearbeiten von plattenförmigen Materialien 12, 13, wie beispielsweise Blechen, dargestellt. Die Bearbeitung von solchen plattenförmigen Materialien 12, 13 kann dabei Stanzen, Biegen, Signieren, Prägen, Gravieren, Entgraten, Rollumformen, insbesondere Rollkneifen, als auch Folientrennen einer Folie auf der Oberfläche des plattenförmigen Materials umfassen. Des Weiteren kann eine solche Werkstückbearbeitungsmaschine 11 ergänzend eine Schneidbearbeitung mittels eines Lasers ermöglichen. Die Werkstückbearbeitungsmaschine 11 besitzt ein C-förmiges Grundgestell 14 mit einem oberen Gestellschenkel 15 und einem unteren Gestellschenkel 16. In einem Rachenraum zwischen dem oberen Gestellschenkel 15 und dem unteren Gestellschenkel 16 ist eine herkömmliche Koordinatenführung 17 untergebracht. Diese dient zum Positionieren beziehungsweise Bewegen der plattenförmigen Werkstücke 12, 13 gegenüber einer Bearbeitungsstation 18 der Werkstückbearbeitungsmaschine 11 sowie zur Magazinierung und zum Ein- und Auswechseln von Werkzeugen 20 an der Bearbeitungsstation 18.

An der Bearbeitungsstation 18 ist ein Werkzeug 20 eingewechselt, welches ein Oberwerkzeug 21 und ein Unterwerkzeug 22 umfasst. Das Unterwerkzeug 22 ist in einer Unterwerkzeugaufnahme 23 am Maschinentisch 25 angeordnet, der einerseits auf dem unteren Grundgestell 16 des Maschinengestells 14 ruht. Das Oberwerkzeug 21 ist an einer Oberwerkzeugaufnahme 24 eines Stößels 26 gelagert. Dieser ist an dem oberen Gestellschenkel 15 des Gestells 14 in Richtung eines Doppelpfeils 27 beispielsweise hydraulisch auf und ab bewegbar. Um eine Hubachse 78 des Stößels 26 sind sowohl das Oberwerkzeug 21 als auch das Unterwerkzeug 22 in Richtung eines Doppelpfeils 29 einstellbar beziehungsweise zustellbar. Entsprechende Zustellbewegungen werden ebenso wie die übrigen wesentlichen Maschinenfunktionen mittels einer schematisch dargestellten Steuerung 30 der Werkstückbearbeitungsmaschine 11 gesteuert. In einem Arbeitsbereich 31 der Bearbeitungsstation 18, welcher durch zumindest eine Werkstückauflage 28 des Maschinentisches 25 gebildet ist, ist zumindest ein erstes plattenförmiges Material 12 durch eine Greifvorrichtung 32 während der Bearbeitung mit dem Werkzeug 20 gehalten und relativ in der Bearbeitungsstation 18 verfahrbar geführt. Des Weiteren kann in dem Arbeitsbereich 31 zumindest ein weiteres beziehungsweise zweites plattenförmiges Material 13 durch eine weitere Greifvorrichtung gehalten sein, wobei diese Greifvorrichtung vorteilhafterweise der Greifvorrichtung 32 entspricht. Diese beiden Greifvorrichtungen 32, 32' sind vorzugsweise unabhängig voneinander zum Verfahren des ersten plattenförmigen Materials 12 und zweiten plattenförmigen Materials 13 auf der Werkstückauflage 28 ansteuerbar. Alternativ können noch weitere plattenförmige Materialien durch weitere Greifvorrichtungen in dem Arbeitsbereich 31 angeordnet und aufgenommen sein.

Das erste plattenförmige Material 12 weicht vorteilhafterweise von dem zweiten plattenförmigen Material 13 ab. Dies kann in der Materialdicke, in der Materialwahl und/oder in der Oberfläche des plattenförmigen Materials liegen. Nach dem Fertigstellen eines verstärkten Werkstücks 34 aus dem ersten und zumindest einen weiteren, insbesondere zweiten plattenförmigen Material, deren Ausführungsformen nachfolgend noch näher beschrieben werden, wird dieses verstärkte Werkstück 34 beispielsweise durch Absenken eines Tischsegmentes 19 des Maschinentisches 25 aus der Bearbeitungsstation 18 herausgeführt.

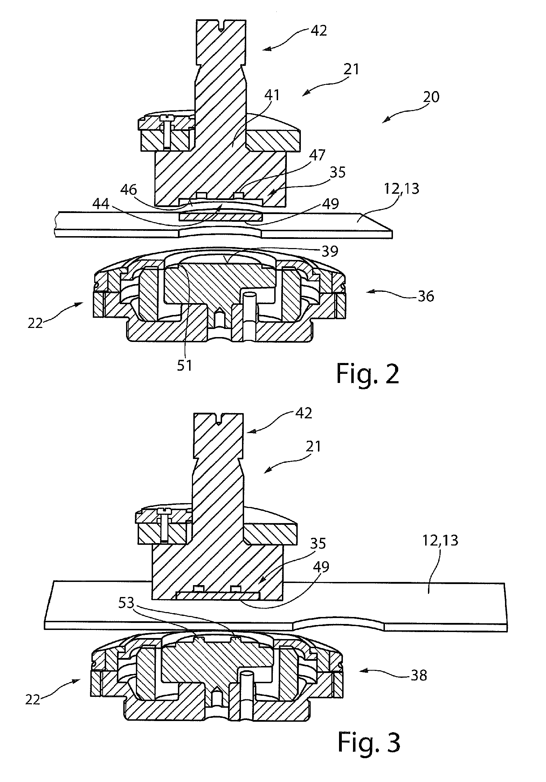

In den Figuren 2 bis 4 sind schematische Schnittansichten dargestellt, durch welche mit einem Werkzeug 20 ein verstärktes Werkstück 34 hergestellt wird. Dieses Werkzeug 20 ist als ein Stanz-Handling-Werkzeug ausgebildet, welches als Oberwerkzeug 21 ein Anstanzwerkzeug und als Unterwerkzeug 22 eine Stanzmatrize 36 und eine Clinch-Matrize 38 aufweist.

Das Oberwerkzeug 21 umfasst einen Werkzeuggrundkörper 41, an welchem ein Einspannzapfen 42 vorgesehen ist, durch welchen das Oberwerkzeug 21 in der Oberwerkzeugaufnahme 24 einspannbar ist. An dem Werkzeuggrundkörper 41 ist ein Stanzstempel 35 vorgesehen, welcher eine Aufnahme 44 beziehungsweise Vertiefung 44 umfasst. Diese Aufnahme 44 ist stirnseitig zur Stanzmatrize 36 am Stanzstempel 35 vorgesehen. An einer Anlagefläche 46 der Aufnahme 44 sind weitere Vertiefungen 47 eingebracht, welche als sogenannter Clinch-Einsatz ausgebildet sind.

Die Aufnahme 44 ist beispielsweise an die Außenkontur eines herzustellenden ersten Werkstückteils 49 angepasst. Im Ausführungsbeispiel ist das erste Werkstückteil 49 als Scheibe ausgebildet. Die Aufnahme 44 weist daher eine scheiben- oder topfförmige Vertiefung auf.

Dem Stanzstempel 35 gegenüberliegend ist das Unterwerkzeug 22 mit der Stanzmatrize 36 ausgebildet. Dieses umfasst eine Schneidkante 51, welche in der Kontur an die Aufnahme 44 angepasst ist. Des Weiteren ist innerhalb der Schneidkante 51 eine Druckfläche 39 ausgebildet, durch welche das erste Werkstückteil 49 in die Aufnahme 44 übergeführt wird.

Bei diesem Stanz-Handling-Werkzeug 20 ist vorgesehen, dass nach dem Durchführen eines Hubes aus dem plattenförmigen Material 12 das erste Werkstückteil 49 herausgestanzt wird und gleichzeitig in die Aufnahme 44 übergeführt und darin geklemmt oder gespannt gehalten aufgenommen ist. Somit ist eine temporäre Fixierung des ersten Werkstückteils 49 an dem Stanzstempel 35 vorgesehen.

Bei dem in Figur 2 dargestellten Ausführungsbeispiel wird das erste Werkstückteil 49 aus dem vollflächigen plattenförmigen Material 12 ausgestanzt. Alternativ kann auch vorgesehen sein, dass das erste Werkstückteil 49 durch einen separaten Bearbeitungsvorgang in der Form und Kontur bereits ausgeschnitten ist und lediglich durch Verbindungsstege zum plattenförmigen Material 12 gehalten ist. Somit ist bei dem Verfahrensschritt gemäß Figur 2 lediglich erforderlich, den Verbindungssteg zu trennen, wobei gleichzeitig auch das erste Werkstückteil 49 in die Aufnahme 44 des Stanzstempels 35 mit der Stanzmatrize 36 eingespannt ist.

Die Aufnahme 44 kann auch an der Stanzmatrize 36 vorgesehen sein, so dass die Verhältnisse vertauscht sind.

In Figur 3 wird das erste Werkstückteil 49 durch das Oberwerkzeug 21 in eine vorbestimmte Position verfahren und zum plattenförmigen Material 12 ausgerichtet. Dabei erfolgt ein Wechsel zwischen der Stanzmatrize 36 und der Clinch-Matrize 38 für den nachfolgenden Verbindungsprozess. Darauffolgend wird das erste Werkstückteil 49 mit dem Stanzstempel 35 des Oberwerkzeugs 21 und das plattenförmige Material 12 mit der dem Oberwerkzeug 21 gegenüberliegend angeordneten Multitool -/Clinch-Matrize 38 verbunden. Diese Multitool-/Clinch-Matrize 38 weist beispielsweise zwei Clinch-Stempel 53 auf, welche in die Clinch-Einsätze beziehungsweise Vertiefungen 47 zumindest teilweise eingreifen können.

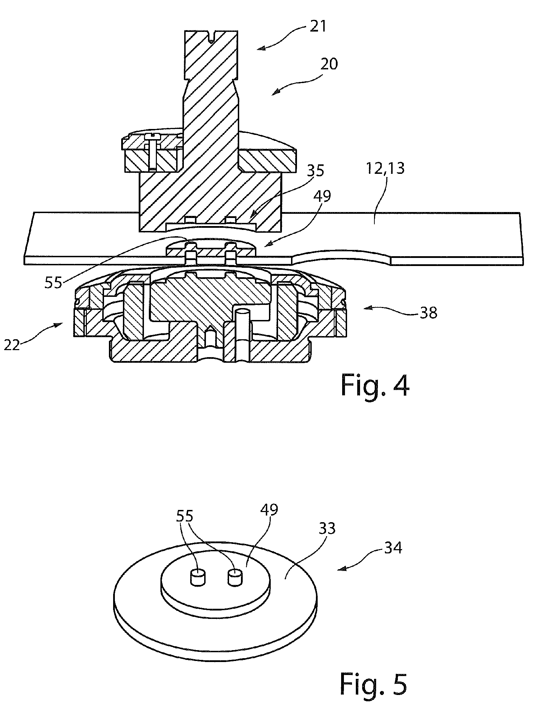

Nachdem das Oberwerkzeug 21 und die Clinch-Matrize 38 zueinander und auch zum plattenförmigen Material 12 ausgerichtet sind, wird das erste Werkstückteil 49 mit dem plattenförmigen Material 12 durch zusatzwerkstofffreie Verbindungspunkte 55 verbunden. Diese Verbindungspunkte 55 entstehen durch ein Fügen, insbesondere Durchsetzfügen, oder Clinchen. Diese Durchsetzpunkte sind in Figur 4 im Schnitt dargestellt. Das erste Werkstückteil 49 ist an dem plattenförmigen Material 12 fixiert. Darauffolgend kann das plattenförmige Material 12 bezüglich der Außenkontur durch weitere Bearbeitungsschritte in der Werkzeugmaschine 11 zum verstärkten Werkstück 34 bearbeitet und/oder fertiggestellt werden.

Bei den in den Figuren 2 bis 4 dargestellten Herstellungsschritten zur Herstellung des verstärkten Werkstücks 34 besteht das verstärkte Werkstück 34 aus demselben Material. Zunächst wird aus dem plattenförmigen Material 12 das erste Werkstückteil 49 ausgestanzt und darauffolgend wird dieses erste Werkstückteil 49 wiederum zum plattenförmigen Material 12 positioniert, um dieses erste Werkstückteil 49 dauerhaft mit dem plattenförmigen Material 12 zu verbinden. Darauffolgen wird aus dem plattenförmigen Material 12 das zweite Werkstückteil 33 gebildet, insbesondere die Außenkontur. Nach dem Ausstanzen des zweiten Werkstückteils 33 ist das verstärkte Werkstück 34 hergestellt. Weitere nachgelagerte Bearbeitungsschritte können an dem bearbeiteten Werkstück 34 gemäß Figur 5 noch durchgeführt werden.

Alternativ zu diesen in den Figuren 2 bis 4 dargestellten Verfahrensschritten kann vorgesehen sein, dass nach dem Ausstanzen des ersten Werkstückteils 49 aus dem plattenförmigen Material 12 ein weiteres plattenförmiges Material 13 zwischen das Oberwerkzeug 21 und Unterwerkzeug 22 positioniert wird, so dass beim darauffolgenden Verbinden des ersten Werkstückteils 49 mit dem plattenförmigen Material 13 bzw. den daraus zu bildenden zweiten Werkstückteils 33 zwei verschiedentliche Materialen und/oder Wandstärken miteinander verbunden werden, um das verstärkte Werkstück 34 zu bilden.

Durch die Einspannung des ersten Werkstückteils 49 in dem Stanzstempel 35 ist eine vereinfachte Handhabung ermöglicht.

Dieses Verfahren ermöglicht die Herstellung des verstärkten Werkstückes 34 gemäß Figur 5. Zudem ist eine hohe Prozesssicherheit und eine Verkürzung der Prozesszeit ermöglicht, da das Zusatzbauteil 49 mittels einer Einspannung am Werkzeug 20 zum Einbringen der Verbindungspunkte 55 zur Herstellung des verstärkten Werkstücks 34 verfahren und positioniert werden kann.

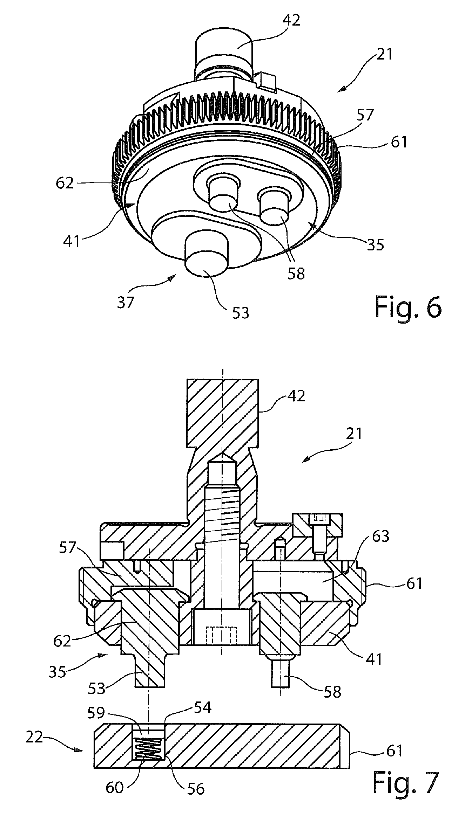

In Figur 6 ist eine alternative Ausgestaltung eines Oberwerkzeugs 21 des Werkzeugs 20 als Stanz-Handling-Werkzeug.

In Figur 7 ist ein Vollschnitt des Oberwerkzeugs 21 gemäß Figur 6 dargestellt. Ergänzend ist ein beispielhaftes Unterwerkzeug 22 ebenfalls im Vollschnitt dargestellt. Das Oberwerkzeug 21 umfasst einen Stanzstempel 35, welcher beispielsweise durch zwei Einzelstempel 58 ausgebildet ist sowie ein Clinch-Werkzeug 37, welches beispielsweise als zylindrischer Clinch-Stempel 53 ausgebildet ist. Der Stanzstempel 35 und das Clinch-Werkzeug 37 sind an dem Werkzeuggrundkörper 41 aufgenommen. Dieser Werkzeuggrundkörper 41 umfasst eine Steuerscheibe 57 mit einer Außenverzahnung 61, wodurch die Steuerscheibe 57 in ihrer Position relativ zum Werkzeuggrundkörper 41 drehbar ist. Oberhalb der Steuerscheibe 57 ist der Einspannzapfen 42 vorgesehen. Der Stanzstempel 35 und das Clinch-Werkzeug 37 sind in dem Werkzeuggrundkörper 41 längs verschiebbar aufgenommen. Hierzu weist der Stanzstempel 35 und das Clinch-Werkzeug 37 jeweils einen Führungskörper 62 auf, an dessen inneren Ende die Steuerscheibe 57 angreift. Beispielsweise ist dadurch der Stanzstempel 35 aktiviert und kann während eines Arbeitshubes nicht in den Freiraum 63 einfahren, wohingegen das Clinch-Werkzeug 37 inaktiviert ist und aufgrund des verbleibenden Freiraumes 63 im Werkzeuggrundkörper 41 einfahren kann.

Das im Schnitt dargestellte Unterwerkzeug 22 weist eine Gegenschneide 54 auf, welche eine Vertiefung begrenzt. In der Vertiefung 56 ist ein Auswerfer 59 durch ein Federelement 60 in der Vertiefung 56 verschiebbar aufgenommen. Des Weiteren ist in dem Unterwerkzeug 22 jeweils Stanzstempelaufnahme vorgesehen, die vor und hinter der Schnittebene liegen und deshalb nicht dargestellt sind. Auch dieses Unterwerkzeug 22 kann über eine Außenverzahnung 61 drehbar angesteuert werden damit das Unterwerkzeug 22 und Oberwerkzeug 21 passend zueinander ausgerichtet sind. Bevorzugt ist also ein Multitool-Oberwerkzeug und -Unterwerkzeug vorgesehen.

Bei der Handhabung eines ersten Werkstückteils 49, welches sich flächig derart erstreckt, dass dieses von dem Stanzstempel 35 in einer Aufnahme 44 nicht mehr aufgenommen werden kann, wird bevorzugt ein solches Oberwerkzeug 21 gemäß den Figuren 5 und 6 verwendet. Daraus ergibt sich folgende Verfahrensweise:

Bei der Ausführungsform des Oberwerkzeugs 21 ist beispielsweise vorgesehen, dass ein Clinch-Stempel 53 und ein aus zwei Einzelstempel 58 gebildeter Stanzstempel 35 vorgesehen sind. Der Clinch-Stempel 53 und die Einzelstempel 58 liegen bevorzugt auf einem gemeinsamen Teilkreis.

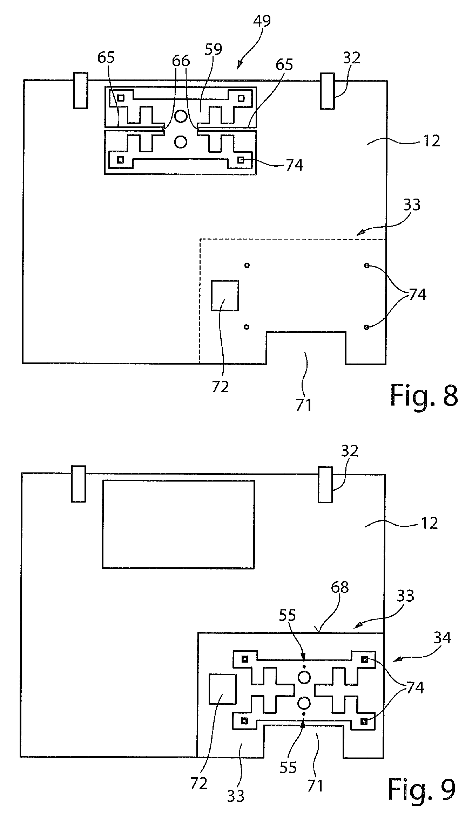

In Figur 8 ist beispielsweise eine Draufsicht auf das plattenförmige Material 12 dargestellt, welches durch die Greifvorrichtung 32 gehalten ist. Durch eine Stanz- oder Laserbearbeitung wird in das plattenförmige Material 12 das erste Werkstückteil 49 eingebracht, wobei das erste Werkstückteil 49 durch Verbindungsstege 65 fest mit dem plattenförmigen Material 12 verbunden ist. Zum Freischneiden des ersten Werkstückteils 49 wird der Stanzstempel 35 aktiviert. Anschließend werden die beiden Einzelstempel 58 des Stanzstempels 35 auf das erste Werkstückteil 49 zu bewegt, wobei unterhalb des ersten Werkstückteils 49 bereits die Multitool-/Stanzmatrize 36 positioniert ist. Die Einzelstempel 58 schneiden die Kreiskontur 66 und trennen gleichzeitig das erste Werkstückteil 49 von den Verbindungsstegen 65. Das Clinch-Werkzeug 37 ist inaktiv, so dass dieses in den Werkzeuggrundkörper 41 einfahren kann. Nach dem Freischneiden des erste Werkstückteils 49 von den Verbindungsstegen 65 beziehungsweise nach dem Einbringen des Trennschnittes verbleibt das erste Werkstückteil 49 aufgrund eines Verklemmens oder Verkeilens der beiden Kreiskonturen 66 mit den Einzelstempeln 58 am Stanzstempel 35, so dass dieses darauffolgend aus der Bearbeitungsebene abgehoben und zum zweiten Werkstückteil 33 positioniert wird. Das zweite Werkstückteil 33 kann gemäß diesem Ausführungsbeispiel in dasselbe plattenförmige Material 12 eingebracht werden, aus welchem das erste Werkstückteil 49 hergestellt wird. Das zweite Werkstückteil 33 kann beispielsweise zumindest eine Aussparung 71 und/oder zweite eine Durchbrechung 72 umfassen. Dies ist nur beispielhaft. Vor oder während dem Aufsetzen des ersten Werkstückteils 49 auf das zweite Werkstückteil 33 wird die Steuerscheibe 57 betätigt, so dass der Stanzstempel 35 mit den zwei Einzelstempeln 58 inaktiviert und das Clinch-Werkzeug 37 aktiviert wird. Darauffolgend kann unmittelbar zumindest ein Verbindungspunkt 55 eingebracht werden, um zumindest eine Vorfixierung des ersten Werkstückteils 49 zum zweiten Werkstückteil 33 zu erzielen. Dieser kann in Abhängigkeit der Ausrichtung des Clinch-Werkzeugs 37 zum Stanzwerkzeug 35 am Werkzeuggrundkörper 41 des Oberwerkzeuges 21 links oder rechts erfolgen, wobei in Figur 9 beide Möglichkeiten dargestellt sind. Nach dem Positionieren des ersten Werkstückteils 49 auf dem zweiten Werkstückteil 33 werden diese durch das Clinch-Werkzeug 37 miteinander verbunden. Bis zu diesem Verfahrensschritt bleibt das Werkstück 49 durch das Oberwerkzeug 21 geklemmt oder gespannt gehalten. In einem darauffolgenden nicht näher dargestellten Bearbeitungsschritt kann dann eine Außenkontur 68 des zweiten Werkstückteils 33 ausgeschnitten und das verstärkte Werkstück 34 von dem Maschinentisch 25 abgeführt werden.

Alternativ und nicht näher dargestellt kann vorgesehen sein, dass zwei oder mehrere erste Werkstückteile 49 übereinander liegend mit derselben oder voneinander abweichenden Kontur auf dem plattenförmigen Material 12 zur Bildung des verstärkten Werkstücks 34 übereinander liegend angeordnet und miteinander verbunden sein können. Dabei kann auch vorgesehen sein, dass sowohl das plattenförmige Material 12 als auch das zumindest eine erste Werkstückteil 49 eine Profilierung, Konturierung, Rippenstruktur oder dergleichen aufweisen können und dennoch an einzelnen Verbindungspunkten fest miteinander verbunden sind.

## Patentansprüche

1. Verfahren zur Herstellung von Werkstücken aus mehreren gleichen oder voneinander abweichenden plattenförmigen Materialien (12, 13), insbesondere zur Herstellung eines verstärkten Werkstücks (34),
- bei dem mit einem Stanz-Handling-Werkzeug (20), welches ein Oberwerkzeug (21) mit zumindest einem Stanzstempel (35) und ein Unterwerkzeug (22) mit zumindest einer Stanzmatrize (36) aufweist, zumindest ein erstes Werkstückteil (49) aus einem ersten plattenförmigen Material (12) durch einen Trennschnitt freigeschnitten wird,
- bei dem beim Freischneiden das erste Werkstückteil (49) durch das Oberwerkzeug (21) oder das Unterwerkzeug (22) geklemmt oder gespannt gehalten wird,
- bei dem ein Clinch-Werkzeug (37) dem das erste Werkstückteil (49) aufnehmenden Oberwerkzeug (21) oder Unterwerkzeug (22) zugeordnet und dazwischen liegend das plattenförmige Material (12) oder ein weiteres plattenförmiges Material (13), das von dem Material des ersten Werkstückteils (49) abweicht oder ein zweites Werkstückteil (33), welches aus einem der plattenförmigen Materialien (12, 13) hergestellt ist, positioniert und das erste Werkstückteil (49) und das plattenförmige Material (12, 13) oder das zweite Werkstückteil (33) zueinander ausgerichtet werden und
- bei dem das Clinch-Werkzeug (37) und das das erste Werkstückteil (49) aufnehmende Oberwerkzeug (21) oder Unterwerkzeug (22) zusammengeführt und in das plattenförmige Material (12) und in das erste Werkstückteil (49) oder in das zweite Werkstückteil (33) und das erste Werkstückteil (49) zumindest ein zusatzwerkstofffreier Verbindungspunkt (55) eingebracht wird.

2. Verfahren zur Herstellung von Werkstücken aus mehreren gleichen oder voneinander abweichenden plattenförmigen Materialien (12, 13), insbesondere zur Herstellung eines verstärkten Werkstücks (34),
- bei dem mit einem Stanz-Handling-Werkzeug (20), welches ein Oberwerkzeug (21) mit zumindest einem aktivierbaren Stanzstempel (35) und zumindest einem aktivierbaren Clinch-Werkzeug (37) und zumindest ein Unterwerkzeug (22) aufweist, zumindest ein erstes Werkstückteil (49) aus dem ersten plattenförmigen Material (12) durch einen Trennschnitt freigeschnitten wird,
- bei dem beim Freischneiden des ersten Werkstückteils (49) durch den zumindest einen Stanzstempel (35) des Oberwerkzeugs (21) das erste Werkstückteil (49) an dem zumindest einen Stanzstempel (35) geklemmt oder gespannt gehalten wird,
- bei dem das erste Werkstückteil (49) zum plattenförmigen Material (12) oder zu einem weiteren plattenförmigen Material (13), das von dem Material des ersten Werkstückteils (49) abweicht oder zu einem zweiten Werkstückteil (33), welches aus einem der plattenförmigen Materialien (12, 13) hergestellt ist, positioniert wird,
- bei dem der Stanzstempel (35) des Oberwerkzeugs (21) inaktiviert und das am Oberwerkzeug (21) vorgesehenes Clinch-Werkzeug (37) aktiviert wird und
- bei dem das Clinch-Werkzeug (37) am Oberwerkzeug (21) mit einer Multitool-/ Clinch-Matrize (38) zusammengeführt wird und in das plattenförmige Material (12) oder in das davon abweichende plattenförmige Material (12, 13) und das erste Werkstückteil (49) oder in das zweite Werkstückteil (33) und das erste Werkstückteil (49) zumindest ein zusatzwerkstofffreier Verbindungspunkt (55) eingebracht wird.

3. Verfahren nach Anspruch 1 oder 2, **dadurch gekennzeichnet, dass** das erste Werkstückteil (49) und das plattenförmige Material (12, 13) oder das erste Werkstückteil (49) und das zweite Werkstückteil (33) durch ein zusatzwerkstofffreies Fügen, insbesondere Durchsetzfügen, verbunden werden.

4. Verfahren nach einem der vorhergehenden Ansprüche, **dadurch gekennzeichnet, dass** das zumindest eine erste Werkstückteil (49) und das zumindest eine zweite Werkstückteil (33) aus demselben plattenförmigen Material (12) oder aus verschiedenen plattenförmigen Materialien (12, 13) hergestellt werden.

5. Verfahren nach Anspruch 1, **dadurch gekennzeichnet, dass** das erste Werkstückteil (49) in einer Aufnahme (44) an dem Stanzstempel (35) oder der Stanzmatrize (36) geklemmt oder gespannt gehalten wird.

6. Verfahren nach einem der vorhergehenden Ansprüche, **dadurch gekennzeichnet, dass** das zumindest eine erste Werkstückteil (49) und das zweite Werkstückteil (33) durch Stanzen und/oder Laserschneiden hergestellt und das zumindest eine erste Werkstückteil (49) zum Verbinden mit dem zweiten Werkstückteil (33) oder dem plattenförmigen Material (12) innerhalb desselben Arbeitsraumes (31) zugeführt wird.

7. Verfahren nach einem der vorhergehenden Ansprüche, **dadurch gekennzeichnet, dass** zumindest ein Verbindungspunkt (55) als Vorfixierung zwischen dem ersten Werkstückteil (49) und dem plattenförmigen Material (12) oder dem zweiten Werkstückteil (33) eingebracht und nach Beendigung der Bearbeitung des verstärkten Werkstücks (34) der zumindest eine Verbindungspunkt (55) ausgestanzt oder abgetrennt wird.

8. Verfahren nach einem der vorhergehenden Ansprüche, **dadurch gekennzeichnet, dass** zwei oder mehrere zweite Werkstückteile (33) und/oder erste Werkstückteile (49) übereinander liegend positioniert und zu einem verstärkten Werkstück (34), insbesondere als Sandwich-Bauteil, miteinander verbunden werden.

9. Stanz-Handling-Werkzeug zum Herstellen von Werkstücken (34) aus einem plattenförmigen Material (12, 13), mit einem Oberwerkzeug (21), welches zumindest einen Stanzstempel (35) aufweist und mit einem Unterwerkzeug (22), welches zumindest eine Stanzmatrize (36) aufweist, **dadurch gekennzeichnet, dass** nach dem letzten Trennschnitt zum Freischneiden eines ersten Werkstückteils (49) aus dem plattenförmigen Material (12, 13) das erste Werkstückteil (49) durch den zumindest einen Stanzstempel (35) oder die Stanzmatrize (36) geklemmt oder gespannt gehalten ist.

10. Stanz-Handling-Werkzeug nach Anspruch 9, **dadurch gekennzeichnet, dass** das erste Werkstückteil (49) von dem Stanzstempel (35) oder der Stanzmatrize (36) durch zumindest teilweises Umgreifen einer Außenkontur des ersten Werkstückteils (49) oder durch Eingreifen in eine Innenkontur des ersten Werkstückteils (49) gehalten ist.

11. Stanz-Handling-Werkzeug nach Anspruch 9 oder 10, **dadurch gekennzeichnet, dass** das Oberwerkzeug (21) einen Stanzstempel (35) mit einer Aufnahme (44) für das erste Werkstückteil (49) aufweist und das Unterwerkzeug (22) sowohl eine Stanzmatrize (36) mit einer Druckfläche (39) zum Überführen des ersten Werkstückteils (49) in die Aufnahme (44) des Stanzstempels (35) aufweist, als auch ein Clinch-Werkzeug (37) aufweist, welches das erste Werkstückteil (49) und das zweite Werkstückteil (33) mit dem Stanzstempel (35) zu einem verstärkten Werkstück (34) verbindet.

12. Stanz-Handling-Werkzeug nach Anspruch 9 bis 11, **dadurch gekennzeichnet, dass** das Oberwerkzeug (21) zumindest einen Stanzstempel (35) und zumindest ein Clinch-Werkzeug (37) in einem Werkzeuggrundkörper (41) aufweist, die mit einem Führungskörper (62) relativ zum Werkzeuggrundkörper (41) verschiebbar aufgenommen sind und zum Einbringen des Trennschnitts der zumindest eine Stanzstempel (35) aktiviert ist, so dass der Stanzstempel (35) während eines Arbeitshubes nicht verfahrbar zum Werkzeuggrundkörper (41) gehalten ist, und das Clinch-Werkzeug (37) inaktiviert ist, so dass das Clinch-Werkzeug (37) während eines Arbeitshubes in den Werkzeuggrundkörper (41) einfahrbar ist, und zum zusatzwerkstofffreien Verbinden des ersten Werkstückteils (49) mit dem zweiten Werkstückteil (33) der Stanzstempel (35) inaktiviert und das Clinch-Werkzeug (37) gegenüber dem Werkzeuggrundkörper (41) aktiviert ist.

13. Stanz-Handling-Werkzeug nach einem der Ansprüche 9 bis 12, **dadurch gekennzeichnet, dass** der Stanzstempel (35) ein an eine Stanzfläche angrenzende Umfangswand aufweist, die sich gegenüber der Stanzfläche verjüngt.

14. Stanz-Handling-Werkzeug nach einem der Ansprüche 11 bis 13, **dadurch gekennzeichnet, dass** das Clinch-Werkzeug (37) in der Länge kürzer ausgebildet ist als der zumindest eine Stanzstempel (35).
